Europäisches Patentamt

(19) European Patent Office

Office européen des brevets

(11) Publication number: **0 060 284**
**B1**

(12) **EUROPEAN PATENT SPECIFICATION**

(45) Date of publication of patent specification: **12.12.84**

(21) Application number: **81902632.9**

(22) Date of filing: **14.09.81**

(86) International application number:
**PCT/GB81/00188**

(87) International publication number:
**WO 82/01050 01.04.82 Gazette 82/09**

(51) Int. Cl.³: **F 16 H 57/02, B 65 G 23/24**

(54) **A.F.C. DRIVE GEARBOX.**

(30) Priority: **17.09.80 GB 8030010**

(43) Date of publication of application:
**22.09.82 Bulletin 82/38**

(45) Publication of the grant of the patent:
**12.12.84 Bulletin 84/50**

(84) Designated Contracting States:
**DE FR GB**

(56) References cited:
**DE-A-1 932 624**
**DE-A-2 659 479**
**DE-C- 952 252**
**FR-A-1 236 951**
**FR-A-1 404 170**
**FR-A-2 378 218**
**US-A-3 029 661**
**US-A-3 864 990**

(73) Proprietor: **ANDERSON STRATHCLYDE PLC**
**Anderson House 47 Broad Street**
**Glasgow, G40 2QW Scotland (GB)**

(72) Inventor: **TOMLINSON, James Edwin**
**22 Hunter's Rise Pog Moor**
**Near Barnsley Yorkshire (GB)**

(74) Representative: **Wotherspoon, Graham et al**
**FITZPATRICKS 4 West Regent Street**
**Glasgow G2 1RS Scotland (GB)**

## Description

This invention relates to drive gearboxes for an armoured face conveyor (A.F.C.).

An A.F.C. has a limited number of positions where a drive unit can be sited (normally 2 or 3). With increasing power demands up to about 900 kW maximum, gearbox capacities are of the order of 377 kW, although 226 kW should be sufficient for the majority of installations.

To date this has led to gearboxes being excessively over-engineered.

The two common gearbox shapes suffer characteristic problems.

(a) An in-line gearbox extends the front line of powered supports away from the face and consequently width is important. A 500 hp unit would necessarily be much wider than the proposed drive gearbox.

(b) A right-angled gearbox suffers from the out-of-balance weight of the overhung motor and coupling. Again this problem is obviously increased by the use of a larger 500 hp motor.

The terminology 'in-line' and 'right-angled' in the field of A.F.C. Conveyors refers to the position of the gearbox relative to the conveyor and not the position of the input shaft relative to the output shaft.

An object of the present invention is to obviate or mitigate the aforesaid disadvantages.

It is known from FR—A—2 378 218 to provide a power dividing transmission having a basic casing with at least one device over the optimal attachment of a transmission cover or a supplementary transmission casing which device forms a parting joint which is situated on the axis of one of the transmission shafts. The purpose of such power dividing transmissions is to distribute power from a prime mover to a plurality of loads, for example pumps or motors to act on one output shaft. However, the basic casing is capable of receiving the motors in only a transverse disposition relative to the longitudinal axis of the casing.

Thus it is known to provide a drive gearbox comprising a basic casing having interfaces which expose gearing for optional attachments and covers for closing off interfaces not in use, and a plurality of supplementary transmission casings (1, 3) for attachment to the basic casing (2) and having an open interface (16) exposing gearing (14), such as defined in the pre-characterizing part of claim 1.

According to the invention the drive gearbox is a power adding transmission adaptable as an in-line gearbox or a right-angled gearbox according to the features disclosed in claim 1.

It should be noted that only after coupling the or each primary box to the nose module are the gearboxes described as 'right-angled' or 'in-line'.

Reference is made to DE—C—952252 wherein a double chain scraper conveyor for underground pit mining comprises releasably coupled trough pans and has at least at one end a trough-like drive coupling coupled with the adjacent trough pan through releasable coupling members. A reduction gear releasably coupled with the drive member is secured in the longitudinal side of the drive coupling, is about the same length as the drive coupling and is equipped with connecting parts for the selective transverse or longitudinal arrangement of the drive motor.

An embodiment of the present invention will now be described, by way of example, with reference to the accompanying drawings, in which:—

Fig. 1 is a plan view, and
Fig. 1A is a view of an in-line primary box according to the invention;
Fig. 2 is a plan view and
Fig. 2A is a side view of a nose module according to the invention;
Fig. 3 is an end view and
Fig. 3A is a side view of a right-angled primary box according to the invention;
Fig. 4 is a side view and
Fig. 4A is a plan view of a nose module coupled to an in-line primary box forming an in-line gearbox;
Fig. 5 is an end view and
Fig. 5A is a side view of a nose module coupled to a right-angled primary box forming a right-angled gearbox;
Fig. 6 is a side view of a nose module coupled to a right-angled primary box and an in-line primary box;
Fig. 7 is a plan view and
Fig. 7A is a side view of the gearbox of the Fig. 6 and 6A *in situ*.

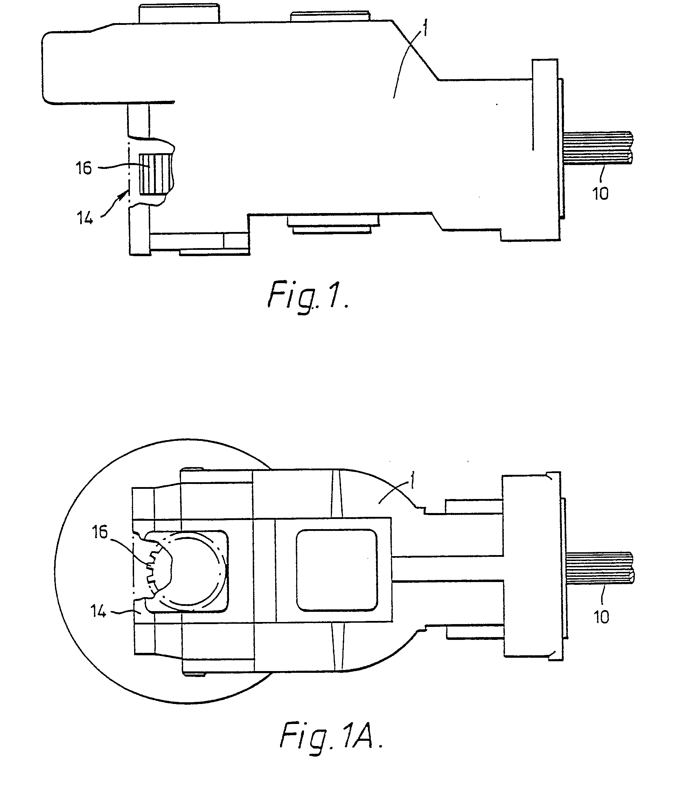

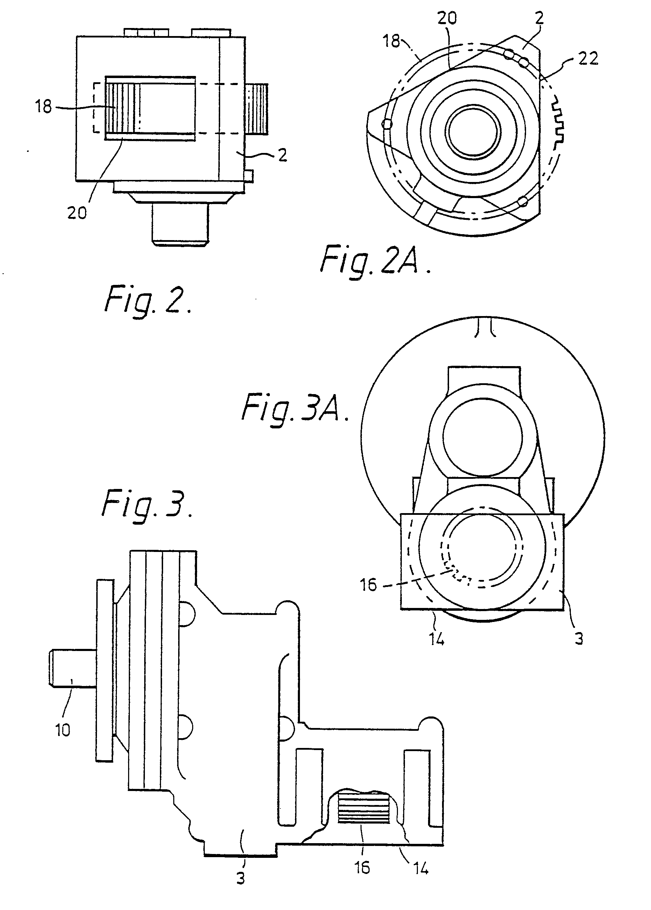

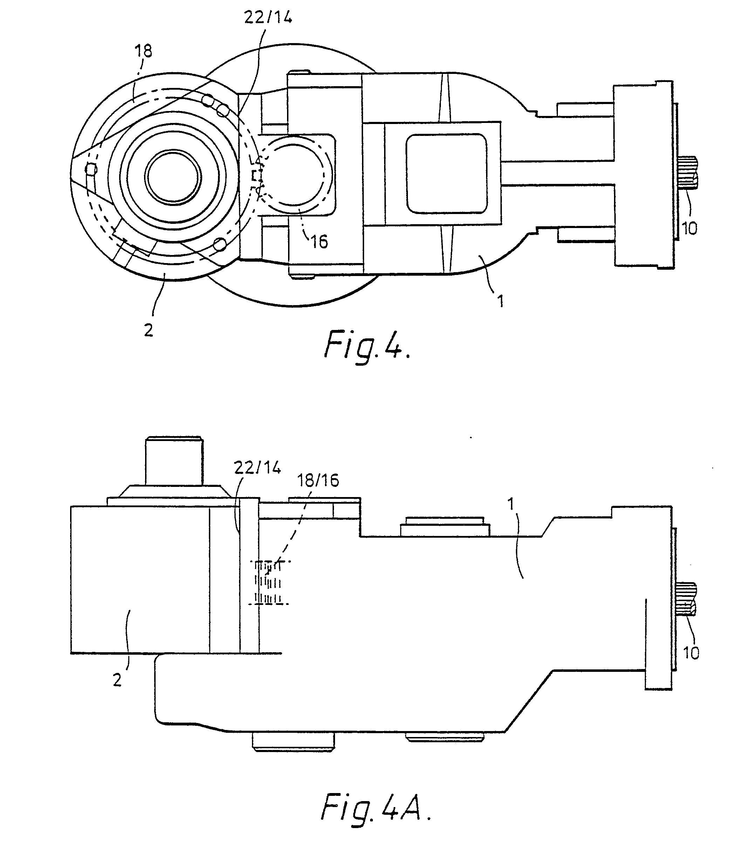

Referring to the drawings, a drive gearbox is formed of an in-line primary box 1 (Fig. 1) a right-angled primary box 3 (Fig. 3) and a nose module output section 2 (Fig. 2) which is coupled to one or other or both of the primary boxes (Figs. 4 to 6).

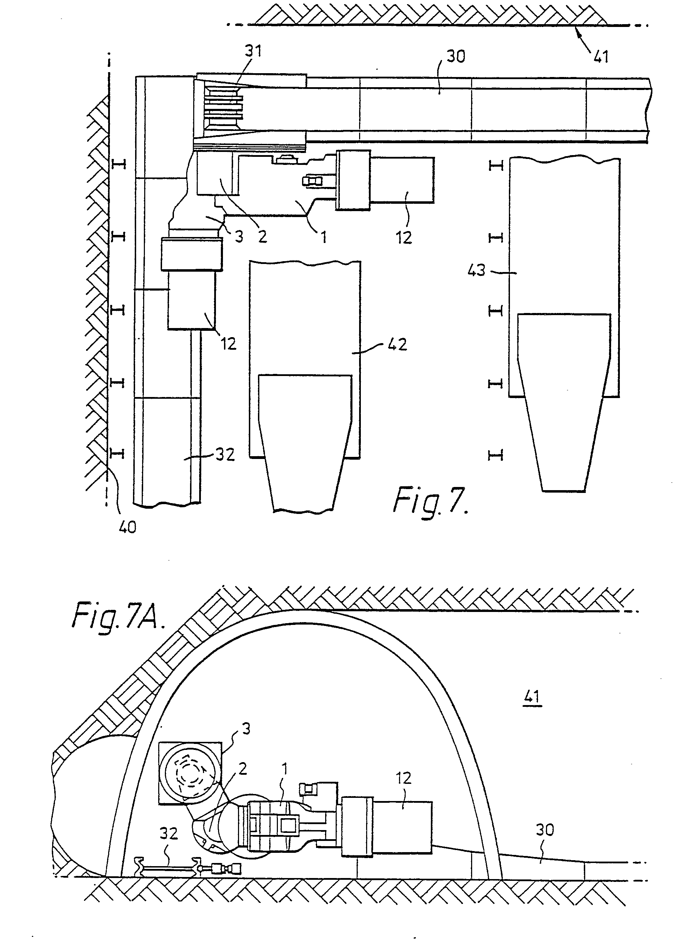

Each primary box 1, 3 has an input shaft 10 extending from one end for coupling to a motor 12 (Fig. 7) and the other end of each box 1, 3 has an open interface 14 which reveals gearing 16 for coupling to the gearing 18 of the nose module.

The nose module includes a substantially triangular configuration of which two adjacent sides form open interfaces 20, 22 which reveal the gearing 18. A cover (not shown) is provided to cover one of the interfaces when the nose module is coupled to only one primary box 1 or 3.

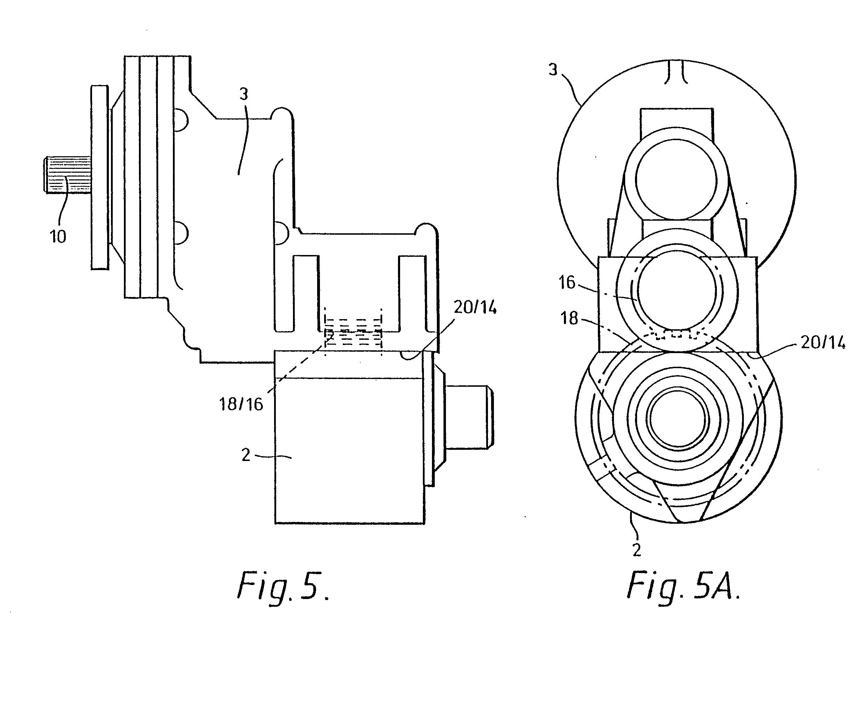

The nose module 3 can be coupled to either one of the primary boxes 1 or 3, as shown in Figs. 4 and 5. When the nose module 2 is coupled to the in-line primary box 1, the in-line gearbox 1, 2 formed thereby lies horizontal with its longitudinal axis in line with that of the conveyor; whereas, the right-angled gearbox formed by coupling the nose module to a right-angled primary box 3, although also lying horizontal, has its longitudinal axes lying normal to that of the conveyor.

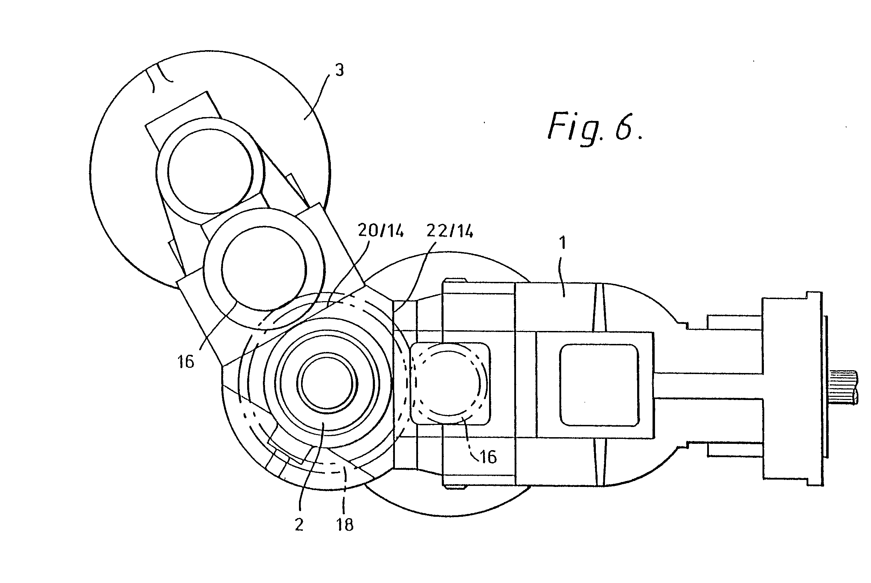

If the nose module is coupled to both 226 kW primary boxes 1, 3 (Fig. 6) a 377 kW dual drive is produced.

The reason for the acceptable loss of 75 kW is due to the configuration of the formed gearbox, wherein the in-line gearbox 1, 2 lies horizontally while the right-angled gearbox 2, 3 extends upwards from the nose module 2. The raised position of the right-angled gearbox 2, 3 is necessary, however, when the gearbox is located at the junction of two conveyors as illustrated in Figs. 7 and 7A; the in-line gearbox 1, 2 lies alongside one conveyor 30 and the nose module output shaft drives the conveyor drum 31. The right-angled gearbox 2, 3 extends above the other conveyor 32 and thus does not obstruct that conveyor. In addition, the angle at which the right-angled gearbox 2, 3 lies reduces the overall length of the formed gearbox and allows the nose module 2 to be placed nearer to the side wall 40 of the tunnel. The face being mined is numbered 41; 42, 43 are roof supports.

If a higher power output is required for, say conveyor 30, a second formed gearbox is similar to that shown in Figs. 6 and 7 can be located at the other end of the conveyor to drive a second drum. This will give a combined power of about 754 kW.

A gearbox formed by combining a nose module with one or any combination of both primary boxes as hereinbefore described is advantageous in several ways:

(1) Adaptability

A number of different gearbox shapes are available using standard components both at the initial installation and for subsequent re-use on later faces, where requirements may have changed.

(2) Power Capacity

Having a dual drive facility means that the gearbox unit size is not excessively over-engineered for the 226 kW application.

(3) Size/Shape

The dual drive concept using a combined right-angled and in-line gearbox offers a shape with elements no larger than existing gearboxes and should present no extra problems of support, or out-of-balance (see Fig. 7).

(4) Design

There are several advantages of design with a dual drive system:

(a) Gear and bearing loads can be reduced on the final reduction train by the dual input from opposing sides.

(b) Because the gearbox is symmetrical about its length and split transversely handability problems are eased. One consequence is that the output shaft need only protrude from one side of the output shaft and enable greater gear reduction on the primary gear trains.

## Claims

1. A drive gearbox for use in driving an armoured face conveyor adaptable as an in-line gearbox, i.e. a gearbox the main axis of which is in parallel with the direction of the conveyor or a right angled gearbox, i.e. a gearbox the main axis of which lies at right angles to the direction of that conveyor, said drive gearbox comprising an output casing (2) having interfaces (20, 22) which expose gearing (18) for optional attachments and cover means to close off an interface not in use, and a plurality of supplementary transmission casings (1, 3) for attachment to the output casing (2) also having an open interface (16) exposing gearing (14) characterised in that the supplementary transmission casings are a first primary box (1) in which the axis of the output gearing is at right angles to the input shaft thereof for coupling to the output casing to form an 'in-line' gearbox and a 'right-angled' further primary box (3) in which the axis of the output gearing is parallel with the input shaft thereof for coupling to the output casing to form a right angled gearbox at least one of which primary boxes is coupled to the output casing (2) to form an in-line gearbox or a right-angled gearbox, and further characterised in that the open interfaces (20, 22) of the output casing (2) are disposed in planes at an acute angle relative to each other.

2. A gearbox as claimed in claim 1 characterised in that the output casing includes a substantially triangular configuration of which two adjacent sides form the open interfaces (20, 22).

3. A gearbox as claimed in claim 1 or 2 characterised in that the input shaft (10) of each primary box (1, 3) extends from one end for coupling to a motor (12) and the other end of each box (1, 3) has the open interface (14) which reveals the gearing (16) for coupling to the gearing (18) of the output casing (2).

## Revendications

1. Boîte d'engrenages d'entraînement pour convoyeur blindé, utilisable soit comme boîte d'engrenages en ligne, c'est-à-dire avec son axe principal disposé parallèlement à la direction du convoyeur, soit comme boîte d'engrenages à angle droit, c'est-à-dire avec son axe principal perpendiculaire à la direction du convoyeur; ladite boîte d'engrenages comportant un carter de sortie (2), ayant des faces de raccordement (20, 22) où apparaît un pignon (18) qui permet plusieurs montages au choix; un couvercle étant prévu pour obturer la face de raccordement inutilisée, et plusieurs carters de transmissions supplémentaires (1, 3), prévus pour se monter sur le carter de sortie (2), comportant aussi une face de raccordement ouverte (16) où apparaît un pignon (14); caractérisé en ce que les carters de transmission supplémentaires sont constitués par une première boîte primaire (1), dans laquelle l'axe du pignon de sortie est perpendiculaire à l'arbre d'entrée de cette boîte, de manière à réaliser une boîte d'engrenages "en ligne" en se montant sur le carter de sortie, et constitués en outre par une autre boîte primaire (3), du type "à angle droit", ayant l'axe de son pignon de sortie parallèle à l'axe de son arbre d'entrée, pour se monter sur le carter de sortie de manière à réaliser une boîte d'engrenages à angle droit; au moins l'une des dites boîtes primaires étant montées sur le carter de sortie (2), pour constituer une boîte d'engrenages en ligne ou une boîte d'engrenages à angle droit; la boîte d'engrenages considérée étant en outre caractérisée en ce que les faces de raccordement ouvertes (20, 22) du carter de sortie (2) sont disposées dans des plans qui forment un angle aigu l'un par rapport à l'autre.

2. Boîte d'engrenages selon la revendication 1, caractérisée en ce que le carter de sortie présente une configuration sensiblement triangulaire, dont deux côtés adjacents forment les faces de raccordement ouvertes (20, 22).

3. Boîte d'engrenages selon l'une des revendications 1 ou 2, caractérisée en ce que l'arbre d'entrée (10) de chaque boîte primaire (1, 3) est en saillie à l'une des extrémités de la boîte pour être accouplé à un moteur (12), et en ce que l'autre extrémité de chaque boîte (1, 3) correspond à la face de raccordement ouverte (14), où apparaît le pignon (16) prévu pour être associé au pignon (18) du carter de sortie (2).

**Patentansprüche**

1. Ein Antriebsgetriebe zur Verwendung beim Antrieb eines armierten Kohleförderbandes, wobei das Getriebe als "In-Line"-Getriebe verwendbar ist, d.h. wobei die Hauptachse des Getriebes parallel zur Förderrichtung ist, oder wobei das Getriebe als abgewinkeltes Getriebe verwendbar ist, d.h. wobei die Hauptachse des Getriebes rechtwinklig zur Förderrichtung liegt, wobei dieses Getriebe ein Abtriebgehäuse (2) mit Schnittstellen (20) umfasst, die Getriebe (18) für wahlweisen Anschluss und Abdeckmittel zum Abschalten von nicht in Betrieb befindlichen Schnittstellen freilegen, sowie eine Vielzahl von zusätzlichen Getriebegehäusen (1, 3) zum Befestigen an dem Abtriebsgehäuse (2), des ebenfalls eine offene Schnittstelle (16) mit Freilegung eines Getriebes (14), hat, dadurch gekennzeichnet, dass die zusätzlichen Getriebegehäuse ein erster primärer Kasten (1) sind, in dem die Achse des Abtriebs im rechten Winkel zur Vortriebswelle zur Ankopplung an das Abtriebsgehäuse steht, um ein "In-Line"-Getriebe zu bilden sowie ein "abgewinkeltes" Getriebe, ein weiterer primärer Kasten (3), in dem die Achse des Abtriebs parallel zur Vortriebsachse zur Ankopplung an das Abtriebsgehäuse steht, um ein abgewinkeltes Getriebe zu bilden, wobei wenigstens einer der primären Kästen an das Abtriebsgehäuse (2) zur Bildung eines In-Line- oder eines abgewinkelten Getriebes gekoppelt ist, und weiterhin gekennzeichnet dadurch, dass die offenen Schnittstellen (20, 22) des Abtriebsgehäuses (2) in Ebenen angeordnet sind, die spitzwinklig zueinander sind.

2. Ein Getriebe nach Anspruch 1, dadurch gekennzeichnet, dass das Abtriebsgehäuse eine im wesentlichen dreieckige Konfiguration beinhaltet, von der zwei aneinanderliegende Seiten die offenen Schnittstellen (20, 22) bilden.

3. Getriebe nach Anspruch 1 oder 2, dadurch gekennzeichnet, dass die Vortriebswelle (10) jedes primären Kastens (1, 3) von einer zur Kupplung an einen Motor dienenden Seite verläuft, und dass das andere Ende jedes Kastens (1, 3) die offene Schnittstelle (14) aufweist, die das Getriebe (16) zur Ankopplung an das Getriebe (18) des Abtriebsgehäuses (2) beinhaltet.

*Fig.1.*

*Fig.1A.*

Fig. 2.

Fig. 2A.

Fig. 3A.

Fig. 3.

22/14

18

2

16

1

10

*Fig.4.*

22/14    18/16

2

1

10

*Fig.4A.*

*Fig. 5.*

*Fig. 5A.*

0 060 284

Fig. 6.

Fig. 7.

Fig. 7A.

6